# EUROPEAN PATENT APPLICATION

(11) **EP 2 602 230 A1**
(43) Date of publication of application: **12.06.2013**
(21) Application number: 11814464.1
(22) Date of filing: 21.07.2011
(51) Int. Cl.: C02F 11/04, C02F 3/28

(54) **ANAEROBIC DIGESTION METHOD**

(30) Priority: 06.08.2010 JP 2010177780
(71) Applicant: Tsukishima Kikai Co., Ltd., Tokyo 104-0051 (JP)
(72) Inventor: NAKABAYASHI Akira, Tokyo 104-0051 (JP); MORITA Mayumi, Tokyo 104-0051 (JP); MATSUDA Keisuke, Tokyo 104-0051 (JP)
(74) Representative: Weitzel, Wolfgang
(86) International application number: PCT/JP2011/066611
(87) International publication number: WO 2012/017834

(57) **Abstract**

This anaerobic digestion method is a method to biologically treat precipitated sludge obtained by a precipitating operation to sewage or wastewater, sludge containing livestock waste sludge, or organic wastewater containing suspended solids of 5000 mg/L or more as a treatment object, by a fixed bed (20) using organism-attaching carriers (22) formed of spherical porous bodies. In addition, a part of the treatment object which has been supplied to the fixed bed (20) is extracted from an upper layer of the fixed bed (20). The extracted treatment object is supplied to a fixed layer (28) composed of the organism-attaching carriers (22), the fixed layer (28) constituting a lower layer of the fixed bed (20). The treatment object is circulated in the fixed bed (20) so as to uniformly disperse the treatment object therein without making the organism-attaching carriers (22) flow and without blocking the fixed layer (28), by using the organism-attaching carriers (22) formed of spherical porous bodies whose average spherical diameter is greater than or equal to 4.0 mm.

## Description

### Technical Field

The present invention relates to an anaerobic digestion method to anaerobically digest sewage sludge, sludge released from industrial waste treatment facilities or the like, sludge containing organic matter of livestock wastes such as fowl droppings, and organic wastewater containing a large amount (5000 mg/L or more) of suspended solids (SS), by using a fixed bed.
Priority is claimed on Japanese Patent Application No. 2010-177780, filed on August 6, 2010, the contents of which are incorporated herein by reference.

### Background Art

In the related art, as an anaerobic digestion method, a method is known in which sewage sludge or the like is supplied to a digestion tank and is treated by anaerobic digestion so as to reduce its volume. In this method, a stirring device for gas stirring or mechanical stirring is provided in the inside of the digestion tank, and sewage sludge or the like is supplied without special pretreatment and is completely mixed by the stirring device, so as to be digested anaerobically.

As an example of an anaerobic digestion method, a method is disclosed (for example, see Patent Document 1) in which sludge is conditioned into a high concentration slurry which contains solids containing organic matter and has at least fluidity, and is digested at an anaerobic digestion tank including a fluidized bed which is formed by using the conditioned sludge as a fluid medium and by making carriers flow whose true specific gravity is 2.0 or more and whose average spherical diameter is 2.0 to 5.0 mm. Objects of this method are to prevent blockage inside the digestion tank, outflow of the carriers to the outside of the tank, and the like, and to improve the contact efficiency between methane bacteria attached to the carriers and sludge, so as to enhance the reaction of sludge digestion.

As another example of an anaerobic digestion method, in addition to the method disclosed in Patent Document 1, a method is disclosed (for example, see Patent Document 2) in which the ratio of a flow stop period to a flow period is 30 or less, and a fluidized bed is operated so as to perform intermittent flowing. Objects of this method are to maintain significant shortening of the digestion days as an advantage of a fluidized bed method, and to reduce the energy required for flowing.

As another example of an anaerobic digestion method, a method is disclosed (for example, see Patent Document 3) in which methane bacteria groups are caused to flow out to suspended sludge in an anaerobic fluidized bed by performing a primary treatment within 10 days of digestion days in an anaerobic fluidized bed bioreactor using organism-attaching carriers, subsequently performing a secondary treatment using a suspended sludge type anaerobic bioreactor which utilizes the methane bacteria groups. An object of this method is to provide a low-cost process able to shorten the digestion days and to obtain high reaction efficiency.

### Document of Related Art

### Patent Document

[Patent Document 1] Japanese Patent Granted Publication No. 2729623
[Patent Document 2] Japanese Patent Granted Publication No. 2819315
[Patent Document 3] Japanese Patent Granted Publication No. 2952301

### Summary of Invention

### Technical Problem

However, in the above-described anaerobic digestion methods in the related art, since organism-attaching carriers are caused to flow to improve the contact efficiency between supplied sludge and the carriers, required pump capacity becomes large and treatment costs become high.
In addition, by the carriers flowing, the carriers contact each other, and methane bacteria which have grown at surfaces of the carriers are removed therefrom. Accordingly, the concentration of held methane bacteria is decreased, and thereby the digestive reaction is regulated.
Furthermore, since the carriers contact each other, the carriers are abraded by themselves. Since high strength of the carriers is required in order to reduce abrasion of the carriers by flowing, the types of carriers capable of being used are limited, and carriers having a large porosity cannot be used. As a result, the treatment efficiency is deteriorated.

The present invention has been made in view of the above circumstances, and aims to provide an anaerobic digestion method in which sludge is uniformly dispersed without blocking a fixed layer composed of organism-attaching carriers which constitutes a lower layer of a fixed bed, thereby improving the contact efficiency between the sludge and methane bacteria held on the organism-attaching carriers, so that the digestive reaction rate of sludge is improved and abrasion of the organism-attaching carriers is prevented.

### Solution to Problem

According to the present invention, an anaerobic digestion method is a method to biologically treat precipitated sludge obtained by a precipitating operation to sewage or wastewater, sludge containing livestock waste sludge, or organic wastewater containing suspended solids of 5000 mg/L or more as a treatment object, by a fixed bed using organism-attaching carriers formed of spherical porous bodies. In addition, part of the treatment object which has been supplied to the fixed bed is extracted from an upper layer of the fixed bed. The extracted treatment object is supplied to a fixed layer composed of the organism-attaching carriers, the fixed layer constituting a lower layer of the fixed bed. The treatment object is circulated in the fixed bed so as to uniformly disperse the treatment object therein without making the organism-attaching carriers flow and without blocking the fixed layer, by using the organism-attaching carriers formed of spherical porous bodies whose average spherical diameter is larger than or equal to 4.0 mm.

In this case, it is preferable that a filling rate of the organism-attaching carriers to a total volume of the fixed bed be 30 to 70 %.

It is preferable that a true specific gravity of the organism-attaching carriers be 1.5 to 4.0 g/cm³.

It is preferable that the average spherical diameter of the organism-attaching carriers be 4.0 to 15.0 mm.

It is preferable that a porosity of the organism-attaching carriers be 40 to 70 %.

It is preferable that a circulation rate of the treatment object in the fixed bed be 0.1 to 10 m/hr.

It is preferable that the treatment object located at the upper layer of the fixed bed be intermittently stirred.

It is preferable that the treatment object which has contacted the organism-attaching carriers be caused to flow out from the fixed bed, subsequently supplying the treatment object to a complete mixing tank in a downstream side, and the treatment object be uniformly stirred and mixed in the complete mixing tank, thereby biologically treating the treatment object.

It is preferable that a digestion gas produced at the fixed bed or a nitrogen gas is supplied to a treatment object supply pipe of the fixed bed or a lower part of the fixed layer, and the organism-attaching carriers be stirred by the digestion gas or the nitrogen gas.

It is preferable that a supply rate of the digestion gas or the nitrogen gas supplied to the treatment object supply pipe or the lower part of the fixed layer be 5 to 40 m/hr.

### Effects of Invention

According to the present invention, part of a treatment object is extracted from an upper layer of a fixed bed, the extracted treatment object is supplied to a fixed layer composed of organism-attaching carriers which constitutes a lower layer of the fixed bed, and thereby the treatment object is circulated in the fixed bed. In the present invention, the treatment object can be uniformly dispersed therein without making the organism-attaching carriers flow and without blocking the fixed layer, by using the organism-attaching carriers formed of spherical porous bodies whose average spherical diameter is greater than or equal to 4.0 mm. Accordingly, the contact efficiency between the treatment object and methane bacteria held on the organism-attaching carriers is improved, and the refinement of solids contained in the treatment object is advanced when the treatment object passes through the fixed layer, whereby the digestive reaction rate of the treatment object is increased. In addition, since the organism-attaching carriers do not flow, the multiplication of methane bacteria at the organism-attaching carriers is enhanced, and methane bacteria are held with a high concentration at the organism-attaching carriers which compose the fixed layer. Thus, methane bacteria are held with a high concentration in the fixed layer inside the fixed bed, and the digestive reaction rate at the fixed bed is increased, whereby the high efficiency in operation can be achieved. In addition, since a part of methane bacteria which have been propagated at the organism-attaching carriers and held thereon with a high concentration is removed therefrom and supplied into the treatment object, if a complete mixing tank is provided in the downstream side of the fixed bed, methane fermentation in the complete mixing tank is maintained and biological treatment is advanced. Furthermore, since the organism-attaching carriers are not caused to flow by the treatment object flowing, it is possible to prevent the organism-attaching carriers from being rubbed with each other and thereby to prevent the abrasion thereof.

### Brief Description of Drawings

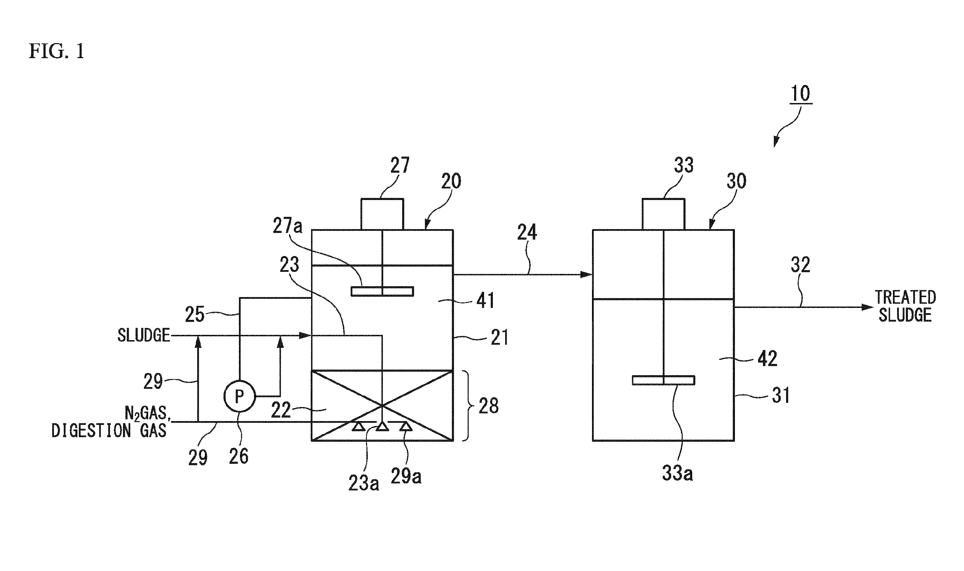

FIG. 1 is a schematic configuration diagram of a digestion apparatus used for an anaerobic digestion method in an embodiment of the present invention.

### Description of Embodiments

An embodiment of an anaerobic digestion method of the present invention is described below.
This embodiment is concretely described for properly understanding the contents of the present invention, and does not limit the scope of the present invention unless there are special indications.

FIG. 1 is a schematic configuration diagram of an anaerobic digestion apparatus used for an anaerobic digestion method in an embodiment of the present invention.
An anaerobic digestion apparatus 10 of this embodiment is configured to include a fixed bed 20 and a complete mixing tank 30 connected to the fixed bed.
The fixed bed 20 is configured to include a treatment tank 21 to contain sludge (treatment object) and to perform digestion treatment thereto, organism-attaching carriers 22, a sludge supply pipe 23 (treatment object supply pipe), a sludge outflow pipe 24, a sludge circulation pipe 25, a circulation pump 26, a stirring device 27, and a gas supply pipe 29.
The complete mixing tank 30 is configured to include a treatment tank 31 to contain the sludge caused to flow out from the fixed bed 20 and to perform digestion treatment thereto, a sludge discharge pipe 32, and a stirring device 33.

In the fixed bed 20, a lower part of the treatment tank 21 is filled with the numerous spherical organism-attaching carriers 22. In addition, a fixed layer 28 composed of the organism-attaching carriers 22 constitutes a lower layer of the fixed bed 20. Methane bacteria to produce methane from organic matter under an anaerobic condition are held on the organism-attaching carriers 22.
The sludge supply pipe 23 supplies (delivers) sludge to the inside of the treatment tank 21 from the outside thereof. A nozzle 23a provided at the end of the sludge supply pipe 23 is arranged inside the fixed layer 28.
The sludge outflow pipe 24 causes sludge to flow out from an upper layer of the fixed bed 20 to the outside thereof (to the complete mixing tank 30, in detail). The sludge outflow pipe 24 is provided so that the base end thereof is located at an upper part of the treatment tank 21 and another end thereof reaches the treatment tank 31 of the complete mixing tank 30.

The sludge circulation pipe 25 is provided to extract part of sludge from the upper layer of the fixed bed 20 and to uniformly supply the extracted sludge to the fixed layer 28. The sludge circulation pipe 25 is provided so that the base end thereof is located at an upper part of the treatment tank 21 and another end thereof reaches the sludge supply pipe 23, and the sludge circulation pipe 25 is connected to the sludge supply pipe 23 in the outside of the treatment tank 21. The connection point between the treatment tank 21 and the sludge circulation pipe 25 is located lower than the connection point between the treatment tank 21 and the sludge outflow pipe 24, in the vertical direction. In this embodiment, the sludge circulation pipe 25 is connected to the sludge supply pipe 23, but the end of the sludge circulation pipe 25 may be directly arranged inside the fixed layer 28.
The circulation pump 26 to extract part of sludge from the upper layer of the fixed bed 20 and to supply the extracted sludge to the fixed layer 28 is provided in the middle of the sludge circulation pipe 25.
The stirring device 27 stirs the sludge located at the upper layer of the fixed bed 20. The stirring device 27 is provided in an upper part of the treatment tank 21. A stirring blade 27a of the stirring device 27 is arranged at an upper part (upper layer of the fixed bed 20) inside the treatment tank 21.

The gas supply pipe 29 diverges into two pipes at the middle thereof. One of the two pipes into which the gas supply pipe 29 diverges is connected to the middle of the sludge supply pipe 23. The end of the other pipe of the two pipes into which the gas supply pipe 29 diverges is provided with a nozzle 29a. The nozzle 29a is arranged at a lower part inside the fixed layer 28.
The gas supply pipe 29 supplies digestion gas produced at the fixed bed 20 or nitrogen gas from a gas supply source separated from the fixed bed 20, to the sludge supply pipe 23 (nozzle 23a, in detail) or a lower part of the fixed layer 28 constituting the lower layer of the fixed bed 20. If the fixed layer 28 is blocked by solids or the like which is contained in sludge, and sludge (circulation sludge) circulated by the sludge circulation pipe 25 is not uniformly dispersed in the fixed layer 28 thereby causing non-uniform flows (channeling), the treatment performance of the fixed bed 20 may be deteriorated. In this case, the above gasses are supplied from the gas supply pipe 29. By supplying these gasses, the organism-attaching carriers 22 composing the fixed layer 28 are stirred.

The sludge discharge pipe 32 discharges the sludge after digestion treatment from an upper layer of the complete mixing tank 30 to the outside thereof. The sludge discharge pipe 32 is provided at an upper part of the treatment tank 31.
The stirring device 33 uniformly stirs the sludge inside the treatment tank 31. The stirring device 33 is provided at an upper part of the treatment tank 31. A stirring blade 33a of the stirring device 33 is arranged at the central part inside the treatment tank 31.

Next, an anaerobic digestion method using this anaerobic digestion apparatus 10 is described below.
First, sludge 41 as a treatment object is supplied from the outside of the fixed bed 20 to the inside of the treatment tank 21 through the sludge supply pipe 23. The sludge 41 is composed of precipitated sludge obtained by a precipitating operation to sewage or wastewater, or livestock waste sludge.
The sludge 41 to be supplied into the treatment tank 21 through the sludge supply pipe 23 is uniformly supplied to the fixed layer 28 from the nozzle 23a provided at the end of the sludge supply pipe 23. At this time, the sludge 41 is released from the nozzle 23a so as to directly contact the numerous organism-attaching carriers 22 composing the fixed layer 28.

In the digestion of the sludge 41 in the treatment tank 21, the temperature of the sludge 41 inside the treatment tank 21 is preferably adjusted to 30 to 38 °C. In addition, the temperature of the sludge 41 may be 50 to 55 °C.

After the supplied sludge amount into the treatment tank 21 reaches a predetermined amount, the supply of the sludge 41 from the outside of the fixed bed 20 is stopped. Part of the sludge 41 supplied to the fixed bed 20 is extracted from the upper layer of the fixed bed 20 through the sludge circulation pipe 25, and the extracted sludge 41 is uniformly supplied to the fixed layer 28 through the sludge circulation pipe 25 and the sludge supply pipe 23, whereby the sludge 41 is circulated in the fixed bed 20. That is, the sludge 41 inside the treatment tank 21 is circulated in the fixed layer 28, the upper layer of the fixed bed 20, the sludge circulation pipe 25, the sludge supply pipe 23, and the fixed layer 28 in sequence. Accordingly, the sludge 41 passes through the fixed layer 28. In detail, the sludge 41 passes through spaces between the numerous organism-attaching carriers 22 composing the fixed layer 28. The sludge 41 passes through between the numerous organism-attaching carriers 22, whereby the solids contained in the sludge 41 are crushed further finely.

In addition, the circulation of the sludge 41 in the fixed bed 20 is very slowly performed so as not to cause the organism-attaching carriers 22 to flow by the sludge 41 flowing.
That is, the circulation rate (superficial velocity) of the sludge 41 from the upper layer of the fixed bed 20 to the fixed layer 28 is preferably 0.1 m/hr to 10 m/hr, more preferably 0.12 to 3 m/hr.
When the circulation rate of the sludge 41 is within this range, in the organism-attaching carriers 22 having a spherical diameter used in the present invention (details will be described later), generally, the sludge 41 does not block the fixed layer 28, the sludge 41 is almost uniformly dispersed inside the fixed layer 28, and non-uniform flows (channeling) are hardly caused. Accordingly, the contact efficiency between the sludge 41 and the methane bacteria held on the organism-attaching carriers 22 is improved, and the digestive efficiency of the sludge 41 is increased.
In addition, since the organism-attaching carriers 22 do not flow, the removal of methane bacteria from the organism-attaching carriers 22 due to the contact of the numerous organism-attaching carriers 22 with each other is prevented. Accordingly, the multiplication of methane bacteria at the organism-attaching carriers 22 is enhanced, and methane bacteria are held with a high concentration at the organism-attaching carriers 22. Thus, the digestive efficiency of the sludge 41 in the fixed layer 28 at which methane bacteria are held with a high concentration is improved.
Furthermore, since the organism-attaching carriers 22 are not caused to flow by the sludge 41 flowing, the organism-attaching carriers 22 are prevented from being rubbed with each other and from being abraded. Since the organism-attaching carriers 22 are prevented from contacting each other, the strength requirement of carriers can be moderated, and carriers having a large porosity can be used. Thus, it becomes possible to hold more methane bacteria at carriers.

When the circulation rate of the sludge 41 is lower than 0.1 m/hr, the flow rate of the sludge 41 passing through inside the fixed layer 28 becomes very low. Accordingly, there is a possibility that the sludge 41 does not pass through the entire inside of the fixed layer 28, non-uniform flows (channeling) are caused, and the digestive efficiency thereof is deteriorated.
On the other hand, when the circulation rate of the sludge 41 exceeds 10 m/hr, there is a possibility that the amount of methane bacteria removed from the organism-attaching carriers 22 is increased, it becomes difficult to hold methane bacteria with a high concentration, and the digestive efficiency of the sludge 41 is deteriorated. In addition, when the organism-attaching carriers 22 are caused to flow by the sludge 41 flowing, there is a possibility that the organism-attaching carriers 22 are rubbed with each other and thereby are abraded. Further, the consumption energy of the circulation pump 26 is increased.

The filling rate of the organism-attaching carriers 22 to the total volume of the fixed bed 20, that is, the total volume of the treatment tank 21, is preferably 30 to 70 %, more preferably 40 to 60 %.
When the filling rate of the organism-attaching carriers 22 is within this range, the sludge 41 and the organism-attaching carriers 22 in the treatment tank 21 are completely separated from each other at an upper part of the treatment tank 21, and the organism-attaching carriers 22 are prevented from flowing into the sludge circulation pipe 25. In addition, the contact efficiency between the sludge 41 and the methane bacteria held on the organism-attaching carriers 22 is improved, and the digestive efficiency of the sludge 41 is increased.
When the filling rate of the organism-attaching carriers 22 is lower than 30 %, there is a possibility that the contact efficiency between the sludge 41 in the treatment tank 21 and the methane bacteria held on the organism-attaching carriers 22 is deteriorated, and the digestive efficiency of the sludge 41 is decreased. On the other hand, when the filling rate of the organism-attaching carriers 22 exceeds 70 %, there is a possibility that the sludge 41 and the organism-attaching carriers 22 are not completely separated from each other at an upper part of the treatment tank 21, the organism-attaching carriers 22 flow into the sludge circulation pipe 25, and are broken by the circulation pump 26.

As the organism-attaching carriers 22, spherical porous bodies formed by sintering clay-based material are used. As the clay-based material, kaolin, bentonite, maifan stone, or the like is mentioned.

The true specific gravity of the organism-attaching carriers 22 is preferably 1.5 to 4.0 g/cm³, more preferably 1.6 to 2.7 g/cm³.
When the true specific gravity of the organism-attaching carriers 22 is within this range, since the organism-attaching carriers 22 are not caused to flow by the sludge 41 flowing, the organism-attaching carriers 22 are prevented from being rubbed with each other and from being abraded. In addition, the porosity of the organism-attaching carriers 22 can be set within a predetermined range, whereby methane bacteria can be held with a high concentration at the organism-attaching carriers 22.
Since the organism-attaching carriers 22 are completely separated from the sludge 41 in the treatment tank 21, at an upper part of the treatment tank 21, and the organism-attaching carriers 22 are prevented from flowing into the sludge circulation pipe 25, the organism-attaching carriers 22 are not broken by the circulation pump 26. In addition, since the sludge 41 and the organism-attaching carriers 22 are completely separated from each other at the upper part of the treatment tank 21, and the organism-attaching carriers 22 do not flow out to the complete mixing tank 30, methane bacteria can be held with a high concentration inside the treatment tank 21.

When the true specific gravity of the organism-attaching carriers 22 is smaller than 1.5 g/cm³, there is a possibility that the organism-attaching carriers 22 are caused to flow by the sludge 41 flowing, the organism-attaching carriers 22 are rubbed with each other, and are abraded. In addition, there is a possibility that the organism-attaching carriers 22 are not completely separated from the sludge 41 in the treatment tank 21, at an upper part of the treatment tank 21, the organism-attaching carriers 22 flow into the sludge circulation pipe 25, and are broken by the circulation pump 26. On the other hand, when the true specific gravity of the organism-attaching carriers 22 exceeds 4 g/cm³, carriers cannot be formed of low-cost normal clay-based material, and the economic practicability thereof is lost.

The average spherical diameter of the organism-attaching carriers 22 is preferably 4.0 to 15.0 mm, more preferably 5.0 to 10.0 mm.
When the average spherical diameter of the organism-attaching carriers 22 is within this range, the sludge 41 can be uniformly dispersed in the fixed layer 28 without blocking the fixed layer 28 by the sludge 41. Accordingly, the contact efficiency between the sludge 41 in the treatment tank 21 and the methane bacteria held on the organism-attaching carriers 22 is improved, and the digestive efficiency of the sludge 41 is increased. Further, since the organism-attaching carriers 22 are completely separated from the sludge 41 in the treatment tank 21, at an upper part of the treatment tank 21, and the organism-attaching carriers 22 are prevented from flowing into the sludge circulation pipe 25, the organism-attaching carriers 22 are not broken by the circulation pump 26.

When the average spherical diameter of the organism-attaching carriers 22 is smaller than 4.0 mm, there is a possibility that the sludge 41 blocks the fixed layer 28, bridging is caused, and the sludge 41 causes non-uniform flows (channeling) in the fixed layer 28. In addition, there is a possibility that the organism-attaching carriers 22 are not completely separated from the sludge 41 in the treatment tank 21, at an upper part of the treatment tank 21, the organism-attaching carriers 22 flow into the sludge circulation pipe 25, and are broken by the circulation pump 26.
On the other hand, when the average spherical diameter of the organism-attaching carriers 22 exceeds 15.0 mm, there is a possibility that the total surface area of the organism-attaching carriers 22 is small, the contact efficiency between the sludge 41 in the treatment tank 21 and the methane bacteria held on the organism-attaching carriers 22 is deteriorated, and the digestive efficiency of the sludge 41 is decreased. In addition, even when the solids contained in the sludge 41 pass through spaces between the organism-attaching carriers 22, the solids may not be crushed finely because the spaces between the organism-attaching carriers 22 are too large.

The porosity of the organism-attaching carriers 22 is preferably 30 to 70 %, more preferably 40 to 60 %.
When the porosity of the organism-attaching carriers 22 is within this range, methane bacteria are held with a high concentration on the organism-attaching carriers 22, and the digestive efficiency of the sludge 41 is increased.
When the porosity of the organism-attaching carriers 22 is lower than 30 %, methane bacteria become difficult to be held with a high concentration on the organism-attaching carriers 22, and the digestive efficiency of the sludge 41 may be decreased. On the other hand, when the porosity of the organism-attaching carriers 22 exceeds 70 %, there is a possibility that the strength of the organism-attaching carriers 22 is deteriorated, and the organism-attaching carriers 22 are abraded or broken as time passes.

In the treatment tank 21, generally, the circulation of the sludge 41 is performed always continuously. In addition, preferably, if the sludge supply into the treatment tank 21 from the outside thereof is performed within a short time, the circulation of the sludge 41 is stopped.
As the reason for this, when the sludge 41 is circulated in the treatment tank 21, the sludge 41 inside the treatment tank 21 are mixed very well, whose condition is near a complete mixed condition. In this case, when sludge is newly supplied into the treatment tank 21, since the capacity of the treatment tank 21 is fixed, the sludge by the amount which is equal to that of the supplied sludge flows out from the treatment tank 21, and is supplied to the complete mixing tank 30. At this time, since the holding time of sludge at the treatment tank 21 is very short, a part of the sludge which almost has not been treated flows out from the treatment tank 21. In contrast, when the circulation of the sludge 41 is stopped, since the sludge 41 supplied to the fixed layer 28 rises to an upper part of the treatment tank 21 at slow velocity, the stirring of the sludge 41 is moderated, and a condition of an extrusion flow (piston flow) is caused in the treatment tank 21. Accordingly, the only sludge which has been treated at the treatment tank 21 flows out from the upper part of the treatment tank 21, whereby the sludge which almost has not been treated is prevented from flowing out, and the treatment efficiency thereof can be improved.

On the way of the digestive treatment of sludge, preferably, the stirring device 27 intermittently stirs the sludge 41 located at an upper layer of the fixed bed 20. Accordingly, the sludge like sponge cake called scum, which is formed at the upper layer of the fixed bed 20, can be crushed, and the gas produced by the digestion of the sludge 41 can be easily discharged.

Each of the intervals at which the stirring device 27 stirs the sludge 41 is preferably 5 minutes to 1 hour.
In addition, the stirring time in one stirring operation is preferably 1 to 5 minutes. Further, if the circulation of the sludge 41 is stopped in supplying sludge to the treatment tank 21 from the outside thereof, the stirring by the stirring device 27 is preferably stopped in order to maintain the extrusion flow in the treatment tank 21.

After the circulation of the sludge 41 in the fixed bed 20, that is, the digestive treatment of the sludge 41, is advanced, the sludge 41 is caused to flow out from the fixed bed 20, and is supplied into the treatment tank 31 of the complete mixing tank 30. Subsequently, the stirring device 33 uniformly stirs and mixes the sludge 42 in the treatment tank 31, whereby the sludge 42 is biologically treated by methane bacteria partially separated from the methane bacteria held with a high concentration on the fixed layer 28 in the treatment tank 21.

In the digestion of the sludge 42 in the treatment tank 31, the temperature of the sludge 42 inside the treatment tank 31 is preferably adjusted to 30 to 38 °C. In addition, the temperature of the sludge 42 may be 50 to 55 °C.
In the treatment tank 31, the sludge 42 is always stirred uniformly.

According to the anaerobic digestion method in this embodiment, part of the sludge 41 is extracted from an upper layer of the fixed bed 20, the extracted sludge 41 is uniformly supplied to the fixed layer 28 composed of the organism-attaching carriers 22, the fixed layer 28 constituting a lower layer of the fixed bed 20, and thereby the sludge 41 is circulated in the fixed bed 20. Therefore, since the contact efficiency between the sludge 41 and the methane bacteria held with a high concentration on the organism-attaching carriers 22 is improved, and the refinement of the solids contained in the sludge 41 is advanced when passing through the fixed layer 28, the digestive reaction rate of the sludge 41 is improved.

By using carriers having the above-described true specific gravity, the average spherical diameter, and the porosity as the organism-attaching carriers 22, the sludge 41 can be uniformly dispersed in the fixed layer 28 without blocking the fixed layer 28. Accordingly, methane bacteria can be held with a high concentration on the organism-attaching carriers 22, the concentration of methane bacteria which is a rate-controlling factor in methane fermentation is increased, the digestive efficiency of the sludge 41 is improved, and hence the digestive reaction rate of the sludge 41 is improved. Consequently, the digestion of sludge takes 4 to 30 days in the related art, but the digestion time can be shortened to 1 to 2 days in this embodiment. Therefore, the facility cost of the digestion apparatus can be reduced greatly.

Since the sludge 41 is circulated very slowly, and further it is not necessary to cause the organism-attaching carriers 22 to flow, the capacity of the circulation pump 26 can become 1/50 to 1/100 of that in the related art. Therefore, the initial cost and running cost of the circulation pump 26 can be reduced significantly.
In addition, since the sludge 41 is circulated very slowly, and the organism-attaching carriers 22 are not caused to flow by the sludge 41 flowing, it is possible to prevent the organism-attaching carriers 22 from being rubbed with each other and thereby to prevent them from being abraded.

The sludge 41 which has been treated at the fixed bed 20 is further treated at the complete mixing tank 30, whereby the digestion thereof can be performed more efficiently.

In this embodiment, precipitated sludge obtained by a precipitating operation to sewage or wastewater, or sludge containing livestock waste sludge is used as the treatment object, but the treatment object is not limited to them. Other sludge, or organic wastewater containing suspended solids (SS) of 5000 mg/L or more may be treated using the anaerobic digestion method in this embodiment.

### Examples

The present invention is further concretely described below by practical examples and comparative examples. In addition, the present invention is not limited to the following examples.

### [Practical Example 1]

The digestion of sludge was performed using an apparatus similar to the digestion apparatus 10 shown in FIG. 1.
As the treatment tank 21 of the fixed bed 20, a tank whose volume was 2 L (Liter) was used.
As the organism-attaching carriers 22 in the fixed bed 20, spherical porous ceramic balls were used, which were formed by sintering clay-based material, and whose true specific gravity was 1.7 g/cm³, spherical diameter was about 10 mm, and porosity was about 50 %.
In the fixed bed 20, the filling rate of the organism-attaching carriers 22 to the total volume of the treatment tank 21 was set at about 50 %.
Sludge was supplied to the treatment tank 21 by 1 L (Liter) per day, the sludge which was mixed sludge of initial precipitated sludge and excess sludge in a sewage treatment plant, and whose sludge concentration (TS) was 18,500 mg/L and organic matter content (VTS) was 74 %. In addition, the temperature of the sludge 41 inside the treatment tank 21 was adjusted to 35 °C, a part of the sludge 41 was extracted from an upper layer of the fixed bed 20, the extracted sludge 41 was supplied to the fixed layer 28, and the digestion of the sludge 41 was performed for 2 days of the digestion days.
The circulation rate of the sludge 41 in the treatment tank 21 was set at 4 L/hr.
The amount of gas which was produced from supplied sludge of 1 L (Liter) in the digestive reaction of the sludge 41 was measured using a wet gas meter manufactured by SHINAGAWA, and the sludge concentration (TS) of the sludge 41 and the digestibility of the sludge 41 were calculated. The results thereof are shown in Table 1.
The average particle size of solids contained in the sludge 41 after the treatment at the fixed bed 20 was measured by using a wet and laser diffraction scattering type particle size distribution measuring method. The results thereof are shown in Table 2.

The sludge 41 which had been treated in the fixed bed 20 was supplied into the treatment tank 31 of the complete mixing tank 30, the temperature of the sludge 42 inside the treatment tank 31 was adjusted to 35 °C, the stirring device 33 uniformly stirred and mixed the sludge 42 for 2 days, and thereby the digestion of the sludge 42 was performed.
As the treatment tank 31 of the complete mixing tank 30, a tank whose volume was 2 L (Liter) was used.
The amount of gas which was produced from supplied sludge of 1 L (Liter) in the digestive reaction of the sludge 42 was measured using a wet gas meter manufactured by SHINAGAWA, and the sludge concentration (TS) of the sludge 42 and the digestibility of the sludge 42 were calculated. The results thereof are shown in Table 1.

### [Comparative Example 1]

Sludge similar to that used to be treated in Practical Example 1 was supplied to a treatment tank of a complete mixing tank, the temperature of the sludge inside the treatment tank was adjusted to 35 °C, a stirring device uniformly stirred and mixed the sludge for 10 days, and thereby the digestion of the sludge was performed.
As the treatment tank of the complete mixing tank, a tank whose volume was 2 L (Liter) was used.
As similar to Practical Example 1, the amount of gas which was produced from supplied sludge of 1 L (Liter) in the digestive reaction of the sludge was measured, and the sludge concentration (TS) of the sludge and the digestibility of the sludge were calculated. The results thereof are shown in Table 1.
In addition, as similar to Practical Example 1, the average particle size of solids contained in the sludge after the treatment was measured. The results thereof are shown in Table 2.

**[TABLE 1]**

| | | SLUDGE CONCENTRATION (TS) (mg/L) | DIGESTIBILITY (%) | GAS YIELD (L/DAY) | GAS YIELD IN SUPPLIED SLUDGE UNIT AMOUNT(L/L) |
|---|---|---|---|---|---|
| PRACTICAL EXAMPLE 1 | FIXED BED | 13,000 | 33 | 2.60 | 2.6 |
| | COMPLETE MIXING TANK | 12,500 | 35 | 1.20 | 1.2 |
| | TOTAL | - | - | 3.80 | 3.8 |
| COMPARATIVE EXAMPLE 1 | | 12,800 | 32 | 0.51 | 2.5 |

**[TABLE 2]**

| | 50%D (*µ*m) | 90%D (*µ*m) |
|---|---|---|
| PRACTICAL EXAMPLE 1 | 87 | 170 |
| COMPARATIVE EXAMPLE 1 | 90 | 180 |

From the results of Table 1, it was confirmed that, though the treatment time at the fixed bed 20 in Practical Example 1 was 1/5 of the treatment time at a complete mixing type in Comparative Example 1, the gas whose amount was equivalent to that by the treatment in Comparative Example 1 was produced by the treatment in Practical Example 1, and the digestibility equivalent to that by the treatment in Comparative Example 1 was achieved.
In addition, it was confirmed that, in Practical Example 1, by providing the complete mixing tank 30 in the downstream side of the fixed bed 20, the total amount of produced gas was 3.8 L/L, and was improved significantly further than 2.5 L/L in Comparative Example 1.

From the results of Table 2, it was confirmed that, in Practical Example 1, by making the sludge pass through the fixed layer 28, the refinement of solids contained in the sludge was further advanced. Therefore, it is expected that, in Practical Example 1, the digestion and decomposition of the sludge 41 are enhanced.

### [Practical Example 2]

Sludge was supplied to the treatment tank 21 by 2 L (Liter) per day, the sludge which was mixed sludge of initial precipitated sludge and excess sludge in a sewage treatment plant, and whose sludge concentration (TS) was 22,500 mg/L and organic matter content (VTS) was 77 %. In addition, a part of the sludge 41 was extracted from an upper layer of the fixed bed 20, the extracted sludge 41 was supplied to the fixed layer 28, and the digestion of the sludge 41 was performed for 1 day of the digestion day, as similar to Practical Example 1.
As similar to Practical Example 1, the amount of gas which was produced from supplied sludge of 1 L (Liter) in the digestive reaction of the sludge was measured, and the sludge concentration (TS) of the sludge and the digestibility of the sludge were calculated. The results thereof are shown in Table 3.

### [Comparative Example 2]

Sludge similar to that used to be treated in Practical Example 2 was supplied to a treatment tank of a complete mixing tank, the temperature of the sludge inside the treatment tank was adjusted to 35 °C, a stirring device uniformly stirred and mixed the sludge for 10 days, and thereby the digestion of the sludge was performed.
As similar to Practical Example 1, the amount of gas which was produced from supplied sludge of 1 L (Liter) in the digestive reaction of the sludge was measured. The results thereof are shown in Table 3.

**[TABLE 3]**

| | | SLUDGE CONCENTRATION (TS) (mg/L) | DIGESTIBILITY (%) | GAS YIELD (L/DAY) | GAS YIELD IN SUPPLIED SLUDGE UNIT AMOUNT(L/L) |
|---|---|---|---|---|---|
| PRACTICAL EXAMPLE 2 | FIXED BED | 17,000 | 20 | 6.7 | 3.4 |
| | COMPLETE MIXING TANK | 15,000 | 34 | 2.5 | 1.3 |
| | TOTAL | - | - | 9.2 | 4.7 |
| COMPARATIVE | EXAMPLE 2 | 14,000 | 36 | 0.93 | 4.7 |

From the results of Table 3, though the treatment time at the fixed bed 20 in Practical Example 2 was 1/10 of the treatment time at a complete mixing type in Comparative Example 2, the amount of gas produced in the fixed bed 20 was 3.4 L/L, which was 72 % of 4.7 L/L as the amount of gas produced in Comparative Example 2. In addition, it was confirmed that, by treating the sludge 42 in the complete mixing tank 30 provided in the downstream side of the fixed bed 20, the total amount of produced gas was 4.7 L/L, which was equivalent to 4.7 L/L in Comparative Example 2.
In addition, the marginal digestion days (the shortest digestion days) in a case where the method of Comparative Example 2 is used are about 5 days. In contrast, it turned out that, by the method of Practical Example 2, even if the reaction time is 1 day, preferable methane fermentation was able to be maintained by the methane bacteria held on the organism-attaching carriers 22.

### Industrial Applicability

According to the present invention, it is possible to provide an anaerobic digestion method to improve a digestive reaction rate of sludge or organic wastewater and to prevent abrasion of organism-attaching carriers.

### Description of Reference Signs

- 10: digestion apparatus
- 20: fixed bed
- 21: treatment tank
- 22: organism-attaching carriers
- 23: sludge supply pipe
- 24: sludge outflow pipe
- 25: sludge circulation pipe
- 26: circulation pump
- 27: stirring device
- 28: fixed layer
- 29: gas supply pipe
- 30: complete mixing tank
- 31: treatment tank
- 32: sludge discharge pipe
- 33: stirring device
- 41, 42: sludge

## Claims

1. An anaerobic digestion method to biologically treat precipitated sludge obtained by a precipitating operation to sewage or wastewater, sludge containing livestock waste sludge, or organic wastewater containing suspended solids of 5000 mg/L or more as a treatment object, by a fixed bed using organism-attaching carriers formed of spherical porous bodies, the anaerobic digestion method comprising:
extracting a part of the treatment object from an upper layer of the fixed bed, the treatment object which has been supplied to the fixed bed;
supplying the extracted treatment object to a fixed layer composed of the organism-attaching carriers, the fixed layer constituting a lower layer of the fixed bed; and
circulating the treatment object in the fixed bed so as to uniformly disperse the treatment object therein without making the organism-attaching carriers flow and without blocking the fixed layer, by using the organism-attaching carriers formed of spherical porous bodies whose average spherical diameter is greater than or equal to 4.0 mm.

2. The anaerobic digestion method according to Claim 1, wherein
a filling rate of the organism-attaching carriers to a total volume of the fixed bed is 30 to 70 %.

3. The anaerobic digestion method according to Claim 1 or 2, wherein
the true specific gravity of the organism-attaching carriers is 1.5 to 4.0 g/cm³.

4. The anaerobic digestion method according to any one of Claims 1 to 3, wherein
the average spherical diameter of the organism-attaching carriers is 4.0 to 15.0 mm.

5. The anaerobic digestion method according to any one of Claims 1 to 4, wherein
a porosity of the organism-attaching carriers is 40 to 70 %.

6. The anaerobic digestion method according to any one of Claims 1 to 5, wherein
a circulation rate of the treatment object in the fixed bed is 0.1 to 10 m/hr.

7. The anaerobic digestion method according to any one of Claims 1 to 6, wherein
the treatment object located at the upper layer of the fixed bed is intermittently stirred.

8. The anaerobic digestion method according to any one of Claims 1 to 7, wherein
the treatment object which has contacted the organism-attaching carriers is caused to flow out from the fixed bed, subsequently supplying the treatment object to a complete mixing tank in a downstream side, and the treatment object is uniformly stirred and mixed in the complete mixing tank, thereby biologically treating the treatment object.

9. The anaerobic digestion method according to any one of Claims 1 to 8, wherein
a digestion gas produced at the fixed bed or a nitrogen gas is supplied to a treatment object supply pipe of the fixed bed or a lower part of the fixed layer, and the organism-attaching carriers are stirred by the digestion gas or the nitrogen gas.

10. The anaerobic digestion method according to Claim 9, wherein
a supply rate of the digestion gas or the nitrogen gas supplied to the treatment object supply pipe or the lower part of the fixed layer is 5 to 40 m/hr.
